# EUROPÄISCHE PATENTSCHRIFT

(11) **EP 3 066 407 B1**
(45) Veröffentlichungstag und Bekanntmachung des Hinweises auf die Patenterteilung: **09.05.2018**
(21) Anmeldenummer: 14780880.2
(22) Anmeldetag: 06.10.2014
(51) Int. Cl.: F28F 9/26, F28D 7/16, F02B 29/04, F02M 26/00, F28D 21/00, F02M 26/32

(54) **WÄRMEÜBERTRAGER**
HEAT EXCHANGER
ÉCHANGEUR DE CHALEUR

(30) Priorität: 07.10.2013 DE 102013220212
(43) Veröffentlichungstag der Anmeldung: 14.09.2016
(73) Patentinhaber: Mahle International GmbH, 70376 Stuttgart (DE)
(72) Erfinder: SIEGEL, Albrecht, 71642 Ludwigsburg (DE); HUND, Simon, 70199 Stuttgart (DE)
(74) Vertreter: Grauel, Andreas
(86) Internationale Anmeldenummer: PCT/EP2014/071342
(87) Internationale Veröffentlichungsnummer: WO 2015/052132

(56) Entgegenhaltungen:
- CN-A- 103 328 914
- DE-A1- 19 962 863
- DE-A1-102009 050 016
- DE-A1-102010 027 068
- DE-A1-102010 027 068
- DE-A1-102012 100 082
- DE-A1-102012 100 082
- DE-A1-102012 204 151
- DE-A1-102013 220 212
- US-A1- 2013 206 364
- US-A1- 2013 206 364

## Beschreibung

### Technisches Gebiet

Die Erfindung betrifft einen Wärmeübertrager, insbesondere für ein Kraftfahrzeug.

### Stand der Technik

Wärmeübertrager in Kraftfahrzeugen sind unter anderem als Abgaswärmeübertrager oder als Ladeluftkühler bekannt, bei welchen das zu kühlende Gas durch Rohre als Kühlstrecke geführt wird, während die Rohre von einem Kühlmittel umströmt werden. Dabei ist es für die zu erzielende Kühlleistung wesentlich, dass die Kühlstrecke eine benötigte Länge in Strömungsrichtung des zu kühlenden Gases aufweist. Allerdings ist es in heutigen Kraftfahrzeugen nicht immer möglich einen solchen benötigten langen Bauraum zur Verfügung zu stellen. So sind auch Bauräume für Wärmeübertrager bekannt, die lediglich sehr kurze aber im Querschnitt eher ausgedehnte Wärmeübertrager erlauben.

Die DE 10 2004 003 790 A1 offenbart einen Stapelscheibenwärmeübertrager, bei welchem eine kompakte abwechselnde Anordnung von Strömungspfaden zwischen Stapelscheiben vorgesehen ist. Dadurch wird nur eine abwechselnde Durchströmung erreicht, so dass eine geringere Leistung erzielt wird als mit oben beschriebenen Wärmeübertragern.

Die DE 10 2012 204 151 A1 offenbart einen Wärmeübertrager gemäß dem Oberbegriff von Anspruch 1.

### Darstellung der Erfindung, Aufgabe, Lösung, Vorteile

Daher ist es die Aufgabe der vorliegenden Erfindung einen Wärmeübertrager zu schaffen, welcher den Anforderungen an die Wärmeübertragerleistung genügt und dennoch den Bauraumanforderungen genügt.

Die Aufgabe der vorliegenden Erfindung wird durch einen Wärmeübertrager mit den Merkmalen gemäß Anspruch 1 gelöst.

Ein Ausführungsbeispiel der Erfindung betrifft einen Wärmeübertrager mit einem ersten Fluideinlass und einem ersten Fluidauslass, wobei zwischen dem ersten Fluideinlass und dem ersten Fluidauslass ein erster Strömungspfad vorgesehen ist, welcher durch eine Anzahl N von Teilströmungspfaden gebildet ist, die parallel zueinander angeordnet sind und seriell nacheinander von einem ersten Fluid durchströmbar sind, wobei jeder Teilströmungspfad aus einer Mehrzahl von Rohren gebildet ist, die parallel zueinander angeordnet sind und parallel von dem ersten Fluid durchströmbar sind, wobei die Rohre von einem zweiten Fluid umströmbar sind, und wobei N größer oder gleich 3 ist. Dadurch wird erreicht, dass der erste Strömungspfad durch Umlenkung verlängert wird und der Wärmeübertrager den in Querrichtung zur Strömungsrichtung verfügbaren Bauraum nutzt. Dabei kann N gleich 3, 4, 5, 6, etc. sein.

Besonders vorteilhaft ist es, wenn die Rohre eines Teilströmungspfads benachbart in einer Reihe angeordnet sind. Dabei sind die Rohre eines Teilströmungspfads in einer Reihe nebeneinander angeordnet. Sie bilden so einen kompakten Strömungspfad.

Alternativ zu einer Mehrzahl von Rohren kann auch ein Rohr mit einer Mehrzahl von Kanälen vorgesehen sein.

Erfindungsgemäß ist es vorteilhaft, wenn die Rohre eines Teilströmungspfads in Reihen benachbart zueinander angeordnet sind, wobei die Reihen der Rohre ebenso benachbart zueinander angeordnet sind. Dabei wird eine Anzahl von Rohren in einer Reihe angeordnet, wobei zumindest zwei Reihen von Rohren vorgesehen sind. Auch dadurch wird eine gute Ausnutzung des verfügbaren Raums erreicht. Der Druckabfall bei der Durchströmung der Rohre ist aufgrund dieser Gestaltung auch gering zu halten.

Weiterhin ist es zweckmäßig, wenn zwischen den Teilströmungspfaden eine Umlenkung des ersten Fluids um 180° von den Rohren des einen Teilströmungspfads zu den Rohren des anderen Teilströmungspfads vornehmbar ist.

Besonders vorteilhaft ist es, wenn die Rohre eines Teilströmungspfads jeweils endseitig in einem Rohrboden dichtend aufgenommen sind und die Umlenkung mittels eines Sammelkastens vornehmbar ist, welcher mittels eines Deckels und dem Rohrboden gebildet wird. Dabei wird der Deckel mit dem Rohrboden dicht verbunden. An dem Deckel können auch Einlass- und/oder Auslassstutzen vorgesehen sein. Durch die Gestaltung mit dem Sammelkasten kann in jedem Sammelkasten eine Durchmischung des zu kühlenden Fluids stattfinden, was die Homogenität der Temperatur des zu kühlenden Fluids verbessert.

Besonders vorteilhaft ist es, wenn ein Rohr eines Teilströmungspfads endseitig mittels eines Rundbogens mit einem Rohr eines nachfolgenden Teilströmungspfads verbunden ist, wobei jedes Rohr eines Teilströmungspfads mit einem Rohr eines nachfolgenden Teilströmungspfads derart verbunden ist.

Dabei ist es vorteilhaft, wenn der Rundbogen ein 180°-Bogen ist.

Erfindungsgemäß ist es vorteilhaft, wenn die Anzahl der Rohre jedes Teilströmungspfads gleich ist. Dadurch wird der Druckabfall über die Strömungslänge durch die Strömungsteilkanäle nahezu konstant gehalten.

Auch ist es vorteilhaft, wenn die Gesamtquerschnittsfläche der Rohre jedes Teilströmungspfads gleich ist. Auch dadurch bleibt der Druckabfall im Wesentlichen gleich.

Auch ist es zweckmäßig, wenn die Anzahl der Rohre jedes Teilströmungspfads in Strömungsrichtung betrachtet zunimmt oder abnimmt. Dadurch kann eine gezielte Veränderung des Druckabfalls über der Strömungslänge vorgenommen werden.

Auch ist es zweckmäßig, wenn die Gesamtquerschnittsfläche der Rohre jedes Teilströmungspfads zu- oder abnimmt.

Auch ist es vorteilhaft, wenn die Rohre von einem Gehäusemantel umgeben sind, wobei das zweite Fluid um die Rohre innerhalb des Gehäusemantels strömt. Dabei sind bevorzugt an dem Gehäusemantel Ein- und Auslassstutzen vorgesehen, um ein Kühlmittel ein- und auszulassen.

Weiterhin ist es zweckmäßig, wenn parallel zu dem ersten Strömungspfad ein zweiter Strömungspfad als Bypasskanal vorgesehen ist. Dies ist insbesondere als Abgaskühler vorteilhaft. So kann beispielsweise in Abhängigkeit eines Betriebspunkts einer Brennkraftmaschine entweder das Abgas gekühlt werden oder im Wesentlichen ungekühlt durch den Bypass geführt werden.

Auch ist es zweckmäßig, wenn der zweite Strömungspfad innerhalb des Gehäusemantels angeordnet ist. So ist er ggf. von zu kühlendem Fluid umgeben. Er kann jedoch auch von zu kühlendem Fluid abgeschirmt bzw. isoliert sein.

Auch ist es vorteilhaft, wenn der zweite Strömungspfad eingangsseitig mit dem ersten Fluideinlass oder mit einem zweiten Fluideinlass in Fluidverbindung steht und ausgangsseitig mit dem ersten Fluidauslass oder mit einem zweiten Fluidauslass in Fluidverbindung steht.

Auch ist es vorteilhaft, wenn die beiden Strömungspfade in Strömungsrichtung des ersten Fluids parallel zueinander angeordnet sind.

Weiterhin ist es vorteilhaft, wenn die Länge des Wärmeübertragers oder der Rohre in Strömungsrichtung des ersten Fluids betrachtet im Wesentlichen gleich oder maximal das Doppelte der Breite des Wärmeübertragers in einer ersten Richtung quer zur Strömungsrichtung des ersten Fluids ist.

Auch ist es zweckmäßig, wenn die Länge des Wärmeübertragers oder der Rohre in Strömungsrichtung des ersten Fluids betrachtet im Wesentlichen maximal etwa das Dreifache der Tiefe des Wärmeübertragers in einer zweiten Richtung quer zur Strömungsrichtung des ersten Fluids ist.

Gemäß der Erfindung ist es vorteilhaft, wenn die Rohre eines Teilströmungspfads benachbart in einer Reihe angeordnet sind.

Auch ist es vorteilhaft, wenn die Rohre eines Teilströmungspfads in Reihen benachbart zueinander angeordnet sind, wobei die Reihen der Rohre ebenso benachbart zueinander angeordnet sind.

Weiterhin ist es vorteilhaft, wenn zwischen den Teilströmungspfaden eine Umlenkung des ersten Fluids um 180° von den Rohren des einen Teilströmungspfads zu den Rohren des anderen Teilströmungspfads vorliegt.

Die erfindungsgemäßen Wärmeübertrager sind insbesondere als Ladeluftkühler oder als Abgaskühler ausgebildet.

Vorteilhafte Weiterbildungen der vorliegenden Erfindung sind in den Unteransprüchen und der nachfolgenden Figurenbeschreibung beschrieben.

### Kurze Beschreibung der Zeichnungen

Im Folgenden wird die Erfindung anhand von einem Ausführungsbeispiel unter Bezugnahme auf eine Zeichnung detailliert erläutert. In der Zeichnung zeigt:
- Fig.1: eine perspektivische Ansicht eines erfindungsgemäßen Wärmeübertragers,
- Fig.2: eine perspektivische Ansicht des Wärmeübertragers nach Fig. 1 ohne Gehäusemantel,
- Fig.3: eine Seitenansicht eines erfindungsgemäßen Wärmeübertragers, und
- Fig.4: eine Seitenansicht des Wärmeübertragers nach Fig. 3 ohne Gehäusemantel.

### Bevorzugte Ausführung der Erfindung

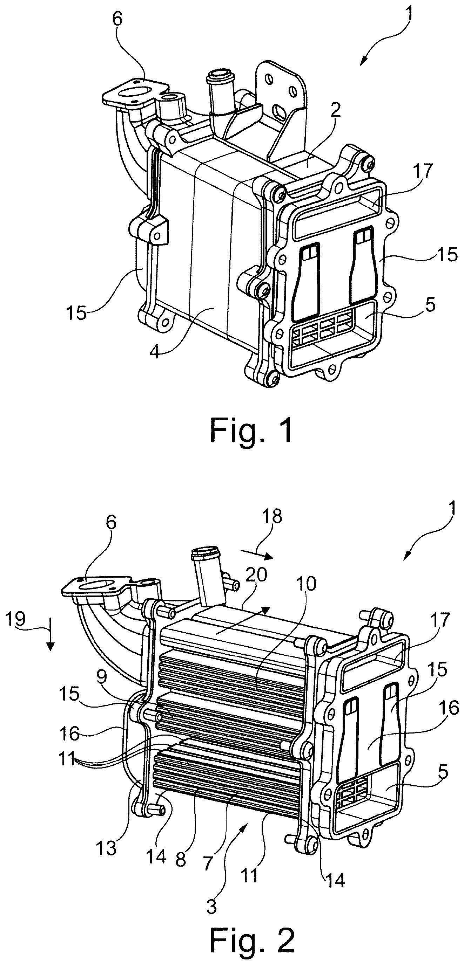

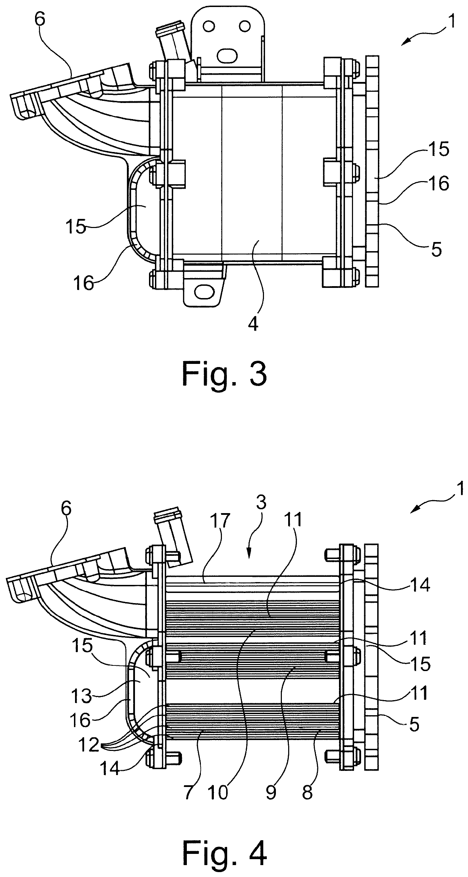

Die Figuren 1 und 3 zeigen einen erfindungsgemäßen Wärmeübertrager 1 in unterschiedlichen Ansichten. Dabei weist der Wärmeübertrager 1 ein Gehäuse 2 auf, welches einen den Wärmetauscherbereich 3 umgebenden Gehäusemantel 4 aufweist. Zur besseren Darstellung des erfindungsgemäßen Wärmeübertragers ist in den Figuren 2 und 4 der jeweilige Wärmeübertrager 1 jedoch ohne den Gehäusemantel dargestellt.

Der Wärmeübertrager 1 weist einen ersten Fluideinlass 5 und einen ersten Fluidauslass 6 auf, mittels welchen ein zu kühlendes Fluid in den Wärmeübertrager 1 eingeleitet bzw. ausgeleitet werden kann. In Strömungsrichtung des ersten Fluids betrachtet zwischen dem ersten Fluideinlass 5 und dem ersten Fluidauslass 6 ist ein erster Strömungspfad 7 vorgesehen. Dabei durchströmt das erste Fluid den ersten Strömungspfad 7 und ein zweites Fluid, ein Kühlfluid, umströmt den ersten Strömungspfad 7 innerhalb des Gehäusemantels 4. Der Fluideinlass ist dabei mit dem Eingangsbereich des ersten Strömungspfads verbunden und der Fluidauslass ist mit dem Ausgangsbereich des ersten Strömungspfads 7 verbunden.

Der Strömungspfad 7 ist in drei Teilströmungspfade 8, 9, 10 unterteilt, wobei diese in Strömungsrichtung des ersten Fluids betrachtet in Serie geschaltet sind. Die Teilströmungspfade 8, 9, 10 sind physikalisch parallel zueinander angeordnet. Allgemein formuliert weist der Strömungspfad 7 eine Anzahl von N Teilströmungspfaden auf, die parallel zueinander angeordnet sind und seriell nacheinander von dem ersten Fluid durchströmt werden. Dabei ist N eine Zahl größer oder gleich 3. Es können somit 3, 4, 5, 6, 7 oder mehr Teilströmungspfade vorgesehen sein. N ist eine natürliche Zahl.

Jeder Teilströmungspfad 8, 9, 10 besteht dabei vorteilhaft aus einer Mehrzahl von Rohren 11 bzw. Kanälen, die parallel zueinander angeordnet sind und parallel von dem ersten Fluid durchströmt werden, wobei die Rohre 11 oder Kanäle von einem zweiten Fluid umströmt werden.

Wie in Figur 2 zu erkennen ist, sind die Teilströmungspfade 8, 9, 10 durch eine Mehrzahl von Rohren gebildet, die in Reihen nebeneinander angeordnet sind, wobei eine Mehrzahl solcher Reihen 12 benachbart zueinander angeordnet sind.

Gemäß eines weiteren Ausführungsbeispiels kann nur eine Reihe von Rohren pro Teilströmungspfad 8, 9, 10 vorgesehen sein, wobei die Rohre dabei nebeneinander oder übereinander angeordnet sind.

Zwischen den Teilströmungspfaden 8, 9, 10 ist jeweils eine Umlenkung 13 des ersten Fluids um 180° von den Rohren des einen Teilströmungspfads 8, 9 zu den Rohren des anderen Teilströmungspfads 9, 10 vorgesehen. Gemäß der Figur 4 sind die Rohre 11 eines Teilströmungspfads 8, 9, 10 jeweils endseitig in einem Rohrboden 14 dichtend aufgenommen, wobei der Rohrboden dazu Öffnungen aufweist, in welche die Rohre eingesteckt sind. Die Umlenkung wird dabei mittels eines Sammelkastens 15 realisiert, welcher mittels eines Deckels 16 und dem Rohrboden 14 gebildet wird. Der Deckel ist dabei kastenartig oder gewölbt ausgebildet und bildet mit dem Rohrboden den Sammelkasten und das durchströmbare Volumen des Sammelkastens.

Alternativ kann ein Rohr 11 eines Teilströmungspfads 8, 9 endseitig auch mittels eines Rundbogens mit einem Rohr 11 eines nachfolgenden Teilströmungspfads 9, 10 verbunden sein, wobei jedes Rohr 11 eines Teilströmungspfads 8, 9 mit einem Rohr 11 eines nachfolgenden Teilströmungspfads 9, 10 derart verbunden ist, dass eine Fluidströmung von dem einen Rohr 11 zu dem anderen Rohr 11 möglich ist. Dabei kann der Rundbogen mit dem jeweiligen Rohr verbunden sein. Alternativ ist es auch vorteilhaft, wenn die Rohre 11 mit dem Rundbogen einteilig ausgebildet sind. Der Rundbogen ist dabei ein 180°-Bogen.

In den Figuren 2 und 4 ist zu erkennen, dass die Anzahl der Rohre 11 oder der Reihen 12 jedes Teilströmungspfads 8, 9, 10 gleich ist. Dabei ist die Gesamtquerschnittsfläche der Rohre 11 jedes Teilströmungspfads 8, 9, 10 gleich.

Bei einem anderen Ausführungsbeispiel kann die Anzahl der Rohre 11 jedes Teilströmungspfads 8, 9, 10 in Strömungsrichtung betrachtet auch zunehmen oder abnehmen. Dadurch kann der Druckabfall geeignet beeinflusst werden. Dadurch wird vorteilhaft auch die Gesamtquerschnittsfläche der Rohre jedes Teilströmungspfads vergrößert oder verkleinert.

In den Figuren ist zu erkennen, dass parallel zu dem ersten Strömungspfad 7 ein zweiter Strömungspfad 17 als Bypasskanal vorgesehen ist. Dieser Strömungspfad 17 ist durch zumindest ein Rohr ausgebildet und innerhalb des Gehäusemantels 4 angeordnet. Der zweite Strömungspfad 17 ist eingangsseitig mit dem ersten Fluideinlass 5 oder mit einem zweiten Fluideinlass in Fluidverbindung und er ist ausgangsseitig mit dem ersten Fluidauslass 6 oder mit einem zweiten Fluidauslass in Fluidverbindung. So kann das Fluid entweder zwischen dem ersten Fluideinlass und/oder dem zweiten Fluideinlass aufgeteilt werden und/oder das Fluid kann entweder aus dem ersten Fluidauslass und/oder dem zweiten Fluidauslass ausgeleitet werden.

Die beiden Strömungspfade 7, 17 bzw. die Rohre der Strömungspfade 7, 17 sind in Strömungsrichtung des ersten Fluids parallel zueinander angeordnet.

Die Länge des Wärmeübertragers 1 oder der Rohre 11 ist in Strömungsrichtung 18 des ersten Fluids betrachtet im Wesentlichen gleich oder maximal das Doppelte der Breite des Wärmeübertragers in einer ersten Richtung 19 quer zur Strömungsrichtung 18 des ersten Fluids. Die Länge des Wärmeübertragers 1 oder der Rohre 11 in Strömungsrichtung 18 des ersten Fluids betrachtet ist im Wesentlichen maximal etwa das Dreifache der Tiefe 20 des Wärmeübertragers in einer zweiten Richtung quer zur Strömungsrichtung 18 des ersten Fluids. Dadurch wird erreicht, dass der Wärmeübertrager 1 eine eher kompakte Bauform aufweist.

## Patentansprüche

1. Wärmeübertrager (1) mit einem ersten Fluideinlass (5) und einem ersten Fluidauslass (6), wobei zwischen dem ersten Fluideinlass (5) und dem ersten Fluidauslass (6) ein erster Strömungspfad (7) vorgesehen ist, welcher durch eine Anzahl N von Teilströmungspfaden (8, 9, 10) gebildet ist, die parallel zueinander angeordnet sind und seriell nacheinander von einem ersten Fluid durchströmbar sind, wobei jeder Teilströmungspfad (8, 9, 10) aus einer Mehrzahl von Rohren (11) gebildet ist, die parallel zueinander angeordnet sind und parallel von dem ersten Fluid durchströmbar sind, wobei die Rohre von einem zweiten Fluid als das Kühlmittel umströmbar sind, und wobei N größer oder gleich 3 ist, **dadurch gekennzeichnet, dass** der Wärmeübertrager als Abgaswärmeübertrager oder als Ladeluftkühler ausgebildet ist, bei welchem das zu kühlende Gas durch Rohre als Kühlstrecke geführt wird, während die Rohre von einem Kühlmittel umströmt werden und wobei das erste Fluid als das zu kühlende Gas ausgebildet ist.

2. Wärmeübertrager nach Anspruch 1, **dadurch gekennzeichnet, dass** die Rohre (11) eines Teilströmungspfads (8, 9, 10) jeweils endseitig in einem Rohrboden (14) dichtend aufgenommen sind und die Umlenkung mittels eines Sammelkastens (15) vornehmbar ist, welcher mittels eines Deckels (16) und dem Rohrboden (14) gebildet wird.

3. Wärmeübertrager nach Anspruch 1 oder 2, **dadurch gekennzeichnet, dass** ein Rohr (11) eines Teilströmungspfads (8, 9) endseitig mittels eines Rundbogens mit einem Rohr (11) eines nachfolgenden Teilströmungspfads (9, 10) verbunden ist, wobei jedes Rohr (11) eines Teilströmungspfads (8, 9) mit einem Rohr (11) eines nachfolgenden Teilströmungspfads (9, 10) derart verbunden ist.

4. Wärmeübertrager nach Anspruch 3, **dadurch gekennzeichnet, dass** der Rundbogen ein 180°-Bogen ist.

5. Wärmeübertrager nach einem der vorhergehenden Ansprüche, **dadurch gekennzeichnet, dass** die Anzahl der Rohre (11) jedes Teilströmungspfads (8, 9, 10) gleich ist.

6. Wärmeübertrager nach einem der vorhergehenden Ansprüche, **dadurch gekennzeichnet, dass** die Gesamtquerschnittsfläche der Rohre (11) jedes Teilströmungspfads (8, 9, 10) gleich ist.

7. Wärmeübertrager nach einem der vorhergehenden Ansprüche 1 bis 4 oder 6, **dadurch gekennzeichnet, dass** die Anzahl der Rohre (11) jedes Teilströmungspfads (8, 9, 10) in Strömungsrichtung betrachtet zunimmt oder abnimmt.

8. Wärmeübertrager nach einem der vorhergehenden Ansprüche 1 bis 5 oder 7, **dadurch gekennzeichnet, dass** die Gesamtquerschnittsfläche der Rohre (11) jedes Teilströmungspfads (8, 9, 10) zu- oder abnimmt.

9. Wärmeübertrager nach einem der vorhergehenden Ansprüche, **dadurch gekennzeichnet, dass** die Rohre (11) von einem Gehäusemantel (4) umgeben sind, wobei das zweite Fluid um die Rohre (11) innerhalb des Gehäusemantels (4) strömt.

10. Wärmeübertrager nach einem der vorhergehenden Ansprüche, **dadurch gekennzeichnet, dass** parallel zu dem ersten Strömungspfad (7) ein zweiter Strömungspfad (17) als Bypasskanal vorgesehen ist.

11. Wärmeübertrager nach Anspruch 10, **dadurch gekennzeichnet, dass** der zweite Strömungspfad (17) innerhalb des Gehäusemantels angeordnet ist.

12. Wärmeübertrager nach Anspruch 10 oder 11, **dadurch gekennzeichnet, dass** der zweite Strömungspfad (17) eingangsseitig mit dem ersten Fluideinlass oder mit einem zweiten Fluideinlass in Fluidverbindung steht und ausgangsseitig mit dem ersten Fluidauslass oder mit einem zweiten Fluidauslass in Fluidverbindung steht.

13. Wärmeübertrager nach einem der vorhergehenden Ansprüche, **dadurch gekennzeichnet, dass** die beiden Strömungspfade (7, 17) in Strömungsrichtung des ersten Fluids parallel zueinander angeordnet sind.

14. Wärmeübertrager nach einem der vorhergehenden Ansprüche, **dadurch gekennzeichnet, dass** die Länge des Wärmeübertragers (1) oder der Rohre (11) in Strömungsrichtung des ersten Fluids betrachtet im Wesentlichen gleich oder maximal das Doppelte der Breite des Wärmeübertragers (1) in einer ersten Richtung quer zur Strömungsrichtung des ersten Fluids ist.

15. Wärmeübertrager nach einem der vorhergehenden Ansprüche, **dadurch gekennzeichnet, dass** die Länge des Wärmeübertragers (1) oder der Rohre (11) in Strömungsrichtung des ersten Fluids betrachtet im Wesentlichen maximal etwa das Dreifache der Tiefe des Wärmeübertragers (1) in einer zweiten Richtung quer zur Strömungsrichtung des ersten Fluids ist.

## Claims

1. A heat exchanger (1) with a first fluid inlet (5) and a first fluid outlet (6), wherein a first flow path (7) is provided between the first fluid inlet (5) and the first fluid outlet (6), the flow path being formed by a number N of partial flow paths (8, 9, 10) which are arranged parallel to one another and through which a first fluid can flow in a serial manner one after the other, wherein each partial flow path (8, 9, 10) is formed of a plurality of tubes (11) which are arranged parallel to one another and through which the first fluid can flow in parallel, wherein a second fluid can flow through the tubes as the coolant and wherein N is greater than or equal to 3, **characterised in that** the heat exchanger is designed as an exhaust gas heat exchanger or as a charge air cooler in which the gas to be cooled is guided through tubes as a cooling line while a coolant flows around the tubes and wherein the first fluid is designed as the gas to be cooled.

2. The heat exchanger according to claim 1, **characterised in that** the ends of the tubes (11) of a partial flow path (8, 9, 10) are each received in a tube bottom (14) in a sealing manner and the deflection can be made via a collection box (15) which is formed by means of a cover (16) and the tube bottom (14).

3. The heat exchanger according to claim 1 or 2, **characterised in that** the end of a tube (11) of a partial flow path (8, 9) is connected to a tube (11) of a following partial flow path (9, 10) by means of a round arch, wherein each tube (11) of a partial flow path (8, 9) is connected to a tube (11) of a following partial flow path (9, 10) in such a manner.

4. The heat exchanger according to claim 3, **characterised in that** the round arch is a 180° arch.

5. The heat exchanger according to one of the preceding claims, **characterised in that** the number of tubes (11) of each partial flow path (8, 9, 10) is the same.

6. The heat exchanger according to one of the preceding claims, **characterised in that** the total cross-sectional area of the tubes (11) of each partial flow path (8, 9, 10) is the same.

7. The heat exchanger according to one of the preceding claims 1 to 4 or 6, **characterised in that** the number of tubes (11) of each partial flow path (8, 9, 10) increases or decreases as seen in the flow direction.

8. The heat exchanger according to one of the preceding claims 1 to 5 or 7, **characterised in that** the total cross-sectional area of the tubes (11) of each partial flow path (8, 9, 10) increases or decreases.

9. The heat exchanger according to one of the preceding claims, **characterised in that** the tubes (11) are surrounded by a housing jacket (4), wherein the second fluid flows around the tubes (11) within the housing jacket (4).

10. The heat exchanger according to one of the preceding claims, **characterised in that** parallel to the first flow path (7), a second flow path (17) is provided as a bypass channel.

11. The heat exchanger according to claim 10, **characterised in that** the second flow path (17) is arranged within the housing jacket.

12. The heat exchanger according to claim 10 or 11, **characterised in that** the inlet side of the second flow path (17) is in fluid connection with the first fluid inlet or with a second fluid inlet and the outlet side is in fluid connection with the first fluid outlet or with a second fluid outlet.

13. The heat exchanger according to one of the preceding claims, **characterised in that** the two flow paths (7, 17) are arranged parallel to one another in the flow direction of the first fluid.

14. The heat exchanger according to one of the preceding claims, **characterised in that** the length of the heat exchanger (1) or of the tubes (11), as seen in the flow direction of the first fluid, is substantially equal to or at most twice the width of the heat exchanger (1) in a first direction transversely to the flow direction of the first fluid.

15. The heat exchanger according to one of the preceding claims, **characterised in that** the length of the heat exchanger (1) or of the tubes (11), as seen in the flow direction of the first fluid, is substantially at most about thrice the depth of the heat exchanger (1) in a second direction transversely to the flow direction of the first fluid.

## Revendications

1. Echangeur de chaleur (1) comprenant une première entrée de fluide (5) et une première sortie de fluide (6), où il est prévu, entre la première entrée de fluide (5) et la première sortie de fluide (6), un premier chemin d'écoulement (7) qui est formé par un nombre N de chemins d'écoulement partiel (8, 9, 10), chemins qui sont disposés en étant parallèles les uns aux autres et sont traversés en série, les uns après les autres, par un premier fluide, où chaque chemin d'écoulement partiel (8, 9, 10) est formé par une pluralité de tubes (11) qui sont disposés en étant parallèles les uns aux autres et sont traversés parallèlement par le premier fluide, où les tubes peuvent être contournés par un second fluide servant de liquide de refroidissement, et où le nombre N est supérieur ou égal à 3, **caractérisé en ce que** l'échangeur de chaleur est conçu comme un échangeur de chaleur de gaz d'échappement ou comme un refroidisseur d'air de suralimentation dans lequel le gaz à refroidir est guidé à travers des tubes servant de trajet de refroidissement, tandis que les tubes sont contournés par un liquide de refroidissement et où le premier fluide est configuré comme étant le gaz à refroidir.

2. Echangeur de chaleur selon la revendication 1, **caractérisé en ce que** les tubes (11) d'un chemin d'écoulement partiel (8, 9, 10) sont à chaque fois logés de façon étanche, côté extrémité, dans un plateau à tubes (14), et le retour de flux peut être effectué au moyen d'un bac collecteur (15) qui est formé par un couvercle (16) et par le plateau à tubes (14).

3. Echangeur de chaleur selon la revendication 1 ou 2, **caractérisé en ce qu'**un tube (11) d'un chemin d'écoulement partiel (8, 9) est relié, côté extrémité, au moyen d'un arc plein cintre, à un tube (11) d'un chemin d'écoulement partiel suivant (9, 10), où chaque tube (11) d'un chemin d'écoulement partiel (8, 9) est relié de cette façon à un tube (11) d'un chemin d'écoulement partiel suivant (9, 10).

4. Echangeur de chaleur selon la revendication 3, **caractérisé en ce que** l'arc plein cintre est un arc de 180°.

5. Echangeur de chaleur selon l'une quelconque des revendications précédentes, **caractérisé en ce que** le nombre de tubes (11) de chaque chemin d'écoulement partiel (8, 9, 10) est identique.

6. Echangeur de chaleur selon l'une quelconque des revendications précédentes, **caractérisé en ce que** la surface de section totale des tubes (11) de chaque chemin d'écoulement partiel (8, 9, 10) est identique.

7. Echangeur de chaleur selon l'une quelconque des revendications précédentes 1 à 4 ou 6, **caractérisé en ce que** le nombre de tubes (11) de chaque chemin d'écoulement partiel (8, 9, 10) augmente ou diminue en regardant dans la direction d'écoulement.

8. Echangeur de chaleur selon l'une quelconque des revendications précédentes 1 à 5 ou 7, **caractérisé en ce que** la surface de section totale des tubes (11) de chaque chemin d'écoulement partiel (8, 9, 10) augmente ou diminue.

9. Echangeur de chaleur selon l'une quelconque des revendications précédentes, **caractérisé en ce que** les tubes (11) sont entourés par une enveloppe de carter (4), où le second fluide circule autour des tubes (11) à l'intérieur de l'enveloppe de carter (4).

10. Echangeur de chaleur selon l'une quelconque des revendications précédentes, **caractérisé en ce qu'**il est prévu un deuxième chemin d'écoulement (17) servant de conduit de dérivation et disposé parallèlement au premier chemin d'écoulement (7).

11. Echangeur de chaleur selon la revendication 10, **caractérisé en ce que** le deuxième chemin d'écoulement (17) est disposé à l'intérieur de l'enveloppe de carter.

12. Echangeur de chaleur selon la revendication 10 ou 11, **caractérisé en ce que** le deuxième chemin d'écoulement (17) est, côté entrée, en communication fluidique avec la première entrée de fluide ou avec une deuxième entrée de fluide, et est, côté sortie, en communication fluidique avec la première sortie de fluide ou avec une deuxième sortie de fluide.

13. Echangeur de chaleur selon l'une quelconque des revendications précédentes, **caractérisé en ce que** les deux chemins d'écoulement (7, 17) sont disposés en étant parallèles l'un à l'autre, suivant la direction d'écoulement du premier fluide.

14. Echangeur de chaleur selon l'une quelconque des revendications précédentes, **caractérisé en ce que** la longueur de l'échangeur de chaleur (1) ou des tubes (11), en regardant dans la direction d'écoulement du premier fluide, est pratiquement identique ou égale, au maximum, au double de la largeur de l'échangeur de chaleur (1) dans une première direction située de façon transversale par rapport à la direction d'écoulement du premier fluide.

15. Echangeur de chaleur selon l'une quelconque des revendications précédentes, **caractérisé en ce que** la longueur de l'échangeur de chaleur (1) ou des tubes (11), en regardant dans la direction d'écoulement du premier fluide, est, au maximum, à peu près égale au triple de la profondeur de l'échangeur de chaleur (1) dans une deuxième direction située de façon transversale par rapport à la direction d'écoulement du premier fluide.
